# EUROPÄISCHE PATENTANMELDUNG

(11) **EP 4 450 262 A1**
(43) Veröffentlichungstag der Anmeldung: **23.10.2024**
(21) Anmeldenummer: 23168524.9
(22) Anmeldetag: 18.04.2023
(51) Int. Cl.: B29C 65/20, B29C 65/78, B29C 65/82, B29C 65/00, B29C 65/14, B29L 23/00

(54) **STIRNFLÄCHENBEURTEILUNG**

(71) Anmelder: Georg Fischer Rohrleitungssysteme AG, 8201 Schaffhausen (CH)
(72) Erfinder: Hasific, Edin, 8200 Schaffhausen (CH); Anello, Alessandro, 8200 Schaffhausen (CH); Gutierrez, Mariano, 8280 Kreuzlingen (CH)
(74) Vertreter: Fenner, Seraina

(57) **Zusammenfassung**

Verfahren zur Qualitätsbeurteilung einer Stumpfschweissung von Kunststoffteilen vorzugsweise Rohrleitungskomponenten mittels einer Stumpfschweissmaschine, wobei zwei Kunststoffteile in koaxialer Lage zueinander mittels Spannvorrichtungen eingespannt und fixiert werden, wobei die sich gegenüberliegenden Stirnseiten der Kunststoffteile mittels eines dazwischen bringbaren Hobels plangehobelt werden und die Kunststoffteilenden mittels eines dazwischen bringbaren Heizspiegels aufgeschmolzen und anschliessend an das Aufschmelzen zusammengefügt werden, wobei nach dem Aufschmelzen die entstandenen Schmelzbereiche an den Stirnseiten der Kunststoffteilenden mittels mindestens eine Kamera überprüft werden.

## Beschreibung

Die Erfindung betrifft ein Verfahren zur Qualitätsbeurteilung einer Stumpfschweissung von Kunststoffteilen vorzugsweise Rohrleitungskomponenten mittels einer Stumpfschweissmaschine, wobei die beiden Kunststoffteile in koaxialer Lage zueinander mittels Spannvorrichtungen eingespannt und fixiert werden, wobei die sich gegenüberliegenden Stirnseiten der Kunststoffteile mittels eines dazwischen bringbaren Hobels plangehobelt werden und die Kunststoffteilenden mittels eines dazwischen bringbaren Heizspiegels aufgeschmolzen und anschliessend an das Aufschmelzen zusammengefügt werden, und eine Stumpfschweissmaschine beinhaltend eine Basiseinheit, einen Hobel, einen Heizspiegel, eine Steuerung, und mindestens zwei sich koaxial gegenüberliegende und entlang der Längsachse, der zu verschweissenden Kunststoffteile, verstellbare Spannvorrichtungen, wobei die beiden sich zugewandten Spannvorrichtungen der beiden miteinander zu verschweissenden Kunststoffteilenden eine sich zugewandte Frontseite aufweisen.

Aus dem Stand der Technik sind Verfahren und Stumpfschweissmaschinen zum Verschweissen von Kunststoffteilen bekannt und werden meist für Verschweissungen von Rohr und Rohrleitungskomponenten angewandt, die in der Industrie oder Versorgung einsetzt werden. Berührungslose Schweissmaschinen beispielsweise IR-Schweissmaschinen werden oft dann eingesetzt, wenn hohe Anforderungen an die Reinheit der Rohrleitung und somit auch an die Schweissung gestellt werden.

Die EP 0 899 085 B1 offenbart ein Verfahren zum Verschweissen von Kunststoffteilen bei dem der Abkühlprozess mittels eines Infrarotsensors überwacht wird und die Abkühlzeit gesteuert wird um eine optimale Verschweissung zu erhalten.

Nachteilig hierbei ist, dass auch bei der Einhaltung des optimalen Abkühlprozesses trotzdem Lunkern in der Schweissnaht entstehen können, die nicht erkannt werden und dadurch eine schlechte Schweissverbindung in eine Anlage verbaut wird.

Es ist Aufgabe der Erfindung ein Verfahren und eine damit verbundene Stumpfschweissmaschine vorzuschlagen, bei welcher die Qualität der Schweissverbindung frühzeitig überprüft wird, ohne dass der Schweissprozess unterbrochen werden muss.

Diese Aufgabe wird erfindungsgemäss dadurch gelöst, dass nach dem Aufschmelzen die entstandenen Schmelzbereiche an den Stirnseiten der Kunststoffteilenden mittels mindestens einer Kamera überprüft werden und dazu mindestens eine Kamera zur Aufnahme der Kunststoffteilstirnseiten an der Stumpfschweissmaschine angeordnet ist.

Beim erfindungsgemässen Verfahren zur Qualitätsbeurteilung einer Stumpfschweissung von Kunststoffteilen vorzugsweise Rohrleitungskomponenten mittels einer Stumpfschweissmaschine, werden die beiden Kunststoffteile in koaxialer Lage zueinander mittels Spannvorrichtungen eingespannt und fixiert. Unter Rohrleitungskomponenten fallen Rohr, Fittings wie auch Armaturen und Ventile, die miteinander verschweissbar sind. Beim erfindungsgemässen Verfahren werden die sich gegenüberliegenden Stirnseiten der Kunststoffteile mittels eines dazwischen bringbaren Hobels plangehobelt. Dadurch werden Unebenheiten oder Verunreinigungen entfernt, was wesentlich für die Qualität der Schweissverbindung ist. Anschliessend werden die Kunststoffteilenden mittels eines dazwischen bringbaren Heizspiegels aufgeschmolzen. Der Heizspiegel wird anstelle des zuvor verwendeten Hobels zwischen den Kunststoffteilenden angeordnet und erwärmt die Kunststoffteilenden kontaktlos, vorzugsweise mittels eines Infrarotwärmespiegels.

Anschliessend an das Aufschmelzen werden die Kunststoffteilenden zusammengefügt. Dazu wird der dazwischen angeordnete Heizspiegel entfernt und die Kunststoffteile zusammengeschoben. Direkt nach dem Aufschmelzen werden die entstandenen Schmelzbereiche an den Stirnseiten der Kunststoffteilenden mittels mindestens einer Kamera überprüft. Dies erfolgt in dem kurzen Zeitfenster während des Entfernens des Heizspiegels und vor dem Zusammenführen der Kunststoffteilenden.

Vorzugsweise erfolgt das Überprüfen der Schmelzbereiche mittels Kamera vor dem Fügen der beiden Kunststoffteilenden. Die Überprüfung nimmt dadurch keine zusätzliche Zeit in Anspruch sondern erfolgt während des Schweissprozesses, so dass sich der Schweissbereich nicht weiter abkühlt vor dem Fügen.

Als bevorzugte Ausgestaltung hat sich gezeigt, wenn die Aufnahme der Stirnseiten der Kunststoffteile durch die Kamera in einem schrägen Blickwinkel erfolgt. Dies ermöglicht, dass die Kamera nicht zuerst frontal zwischen die Stirnseiten der Kunststoffteilenden gebracht werden muss, sondern erlaubt es die Kamera ausserhalb der Stirnflächen bzw. versetzt dazu fest anzuordnen, um direkt nach dem Aufschmelzen eine Aufnahme der Stirnseiten mit dem aufgeschmolzenen Bereich zu erstellen.

Als vorteilhaft hat sich gezeigt, wenn die Aufnahme der Kamera zur Auswertung begradigt wird. Durch die Begradigung der Aufnahme, wird die schräg erfasste Aufnahme in eine frontale Aufnahme konvertiert. Dadurch wird ermöglicht, dass mit Hilfe eines Bildauswertungssystems die Aufnahme ausgewertet wird und die Qualität des Schmelzbereichs der Stirnflächen als ausreichend oder nicht ausreichend für die Schweissung eingestuft wird. Es ist vorteilhaft, dass wenn die Qualität als nicht ausreichend eingestuft wird, der Schweissprozess gestoppt wird und die Kunststoffteilenden nochmals gehobelt werden und ein erneutes Aufschmelzen erfolgt oder die zu verschweissenden Teile aus der Schweissmaschine entfernt und durch andere ersetzt werden. Diese frühzeitige Überprüfung des Schmelzbereichs und Erkennung der Qualität kann einerseits Materialverlust einsparen in dem nicht die komplette Schweissnaht herausgetrennt werden muss sondern nur die beiden einzelnen Stirnseiten nochmals überhobelt werden müssen und andererseits auch Zeit einsparen indem unnötige Schritte vermieden werden können, wenn Fehler im Schmelzbereich bzw. die unzureichende Qualität frühzeitig erkannt wird.

Selbstverständlich kann die Kamera bereits zur Erkennung der eingespannten Kunststoffteile verwendet werden, wodurch autonom z.B. die Dimension, das Material und sonstige Eigenschaften der zu verschweissenden Kunststoffteile erkannt und an die Stumpfschweissmaschine übermittelt werden bzw. die Steuerung wodurch eine manuelle Eingabe vermieden werden kann und dies wiederum zur Fehlerreduktion beiträgt.

Es ist vorteilhaft, wenn die Aufnahme mit einem schrägen Blickwinkel der Kamera in eine frontale Aufnahme konvertiert wird. Wie bereits zuvor erwähnt dient diese um Konvertierung der Auswertung der Aufnahmen. Durch die begradigte bzw. frontale Aufnahme durch die Konvertierung können Lunkern, Einschlüsse Blasenbildungen, Verbrennungen, Verunreinigungen und sonstige unerwünschte Gefügeveränderungen erkannt und ausgewertet werden. Vorzugseise wird mittels eines Bildauswertungssystems und eines Algorithmus evaluiert, welcher Schmelzbereich der geforderten Qualität entspricht und welcher nicht. Es ist vorteilhaft, wenn sich der Algorithmus aufgrund Erfahrungswerte selbst optimiert oder aufgrund eingegebener Erfahrungswerten durch Bedienpersonal sich der Algorithmus optimieren lässt bzw. selbstlernend ist.

Es ist vorteilhaft, wenn die Aufnahme von schräg unten auf die gegenüberliegende Stirnseite des Kunststoffteilendes erfolgt.

Die erfindungsgemässe Stumpfschweissmaschine zum stirnseitigen Verschweissen von Kunststoffteilen und zum Durchführen des Verfahrens zur Qualitätsbeurteilung einer Stumpfschweissung von Kunststoffteilen beinhaltet eine Basiseinheit, einen Hobel, einen Heizspiegel, eine Steuerung, und mindestens zwei sich koaxial gegenüberliegende Spannvorrichtungen und zwei sich zugewandte Frontebenen, wobei mindestens eine Kamera zur Aufnahme der Kunststoffteilstirnseiten an der Stumpfschweissmaschine angeordnet ist.

Die erfindungsgemässe Stumpfschweissmaschine weist eine stabile Basiseinheit auf an der vorzugsweise der Hobel wie auch der Heizspiegel schwenkbar und entlang der Längsachse verschiebbar angeordnet ist. Dadurch kann zum Zeitpunkt des jeweiligen Verfahrensschritts der Hobel oder der Heizspiegel zwischen die Kunststoffteilenden geschwenkt werden um den entsprechenden Prozessschritt durchzuführen. Um den Schweissprozess zu steuern weist die Stumpfschweissmaschine eine Steuerung auf, die den zeitlichen Ablauf sowie die Temperaturen des Vorgangs steuert. Die miteinander zu verschweissenden Kunststoffteile vorzugsweise Rohrkomponenten sind in den koaxial angeordneten Spannvorrichtungen der Stumpfschweissmaschine eingespannt. Vorzugsweise lässt sich zumindest eine der Spannvorrichtungen eines eingespannten Kunststoffteils bzw. auf einer Seite der Stumpfschweissmaschinen entlang der Längsachse verschieben, um die Stirnseiten der Kunststoffteilenden entsprechend dem Verfahrensschritt zu positionieren und abschliessend die Kunststoffteile zusammenzufügen. Die erfindungsgemässe Stumpfschweissmaschine weist zwei sich gegenüberliegende Frontebenen auf zwischen die der Hobel und der Schweissspiegel eingeschwenkt wird.

Die Kunststoffteilenden stehen über die Frontebenen hinaus bzw. überragen dies um miteinander gefügt zu werden. Die beiden Frontebenen liegen sich gegenüber und bilden die dem Schweissbereich zugewandten Frontebenen der beiden Spanneinheiten der Stumpfschweissmaschine, wobei in jeweils einer Spanneinheit jeweils eines der Kunststoffteile angeordnet ist, um die Kunststoffteile miteinander verschweisst werden. Die Frontebenen werden durch die beiden sich zugewandten Stirnseiten der Spanneinheiten der Stumpfschweissmaschine gebildet.

Die Frontebenen werden vorzugsweise durch zwei sich zugewandte Spannvorrichtungen der beiden Kunststoffteile oder durch die Basiseinheit gebildet. Zur Aufnahme der Kunststoffteilstirnseiten ist mindestens eine Kamera an der Stumpfschweissmaschine angeordnet. Es ist vorteilhaft wenn die Kamera an einer starren nicht schwenkbaren Einheit der Stumpfschweissmaschine angeordnet ist, vorzugsweise nicht am Hobel oder dem Schweissspiegel.

Es ist vorteilhaft, wenn die Kamera fest an der Schweissmaschine angeordnet ist. Dadurch, dass die Kamera keine Bewegung ausführt auch während der Aufnahme nicht, wird die Aufnahme sehr deutlich und scharf.

Vorzugsweise ist die Kamera an der Frontebene der Stumpfschweissmaschine angeordnet. Dadurch kann sie auf die Stirnseite der Kunststoffteilenden gerichtet werden. Es ist vorteilhaft wenn die Kamera in einer Vertiefung in der Frontebene angeordnet ist, damit sie geschützt ist. Zudem ist es vorteilhaft, wenn sie schräg zur vertikalverlaufenden Frontebene angeordnet ist, um eine schräge Ausrichtung auf die gegenüberliegenden Stirnseiten des Kunststoffteilendes zu erhalten.

Als bevorzugte Ausführungsform hat sich gezeigt, wenn die Kamera versetzt zur Längsachse angeordnet ist und einen schrägen Blickwinkel zur Aufnahme der Stirnseiten der Kunststoffteilenden aufweist. Die Kamera ist somit nicht frontal bzw. senkrecht auf die Stirnseiten ausgerichtet, sondern ist versetzt zum Zentrum des Querschnitts des Kunststoffteils angeordnet.

Vorzugsweise ist die Kamera seitlich versetzt zur Stirnseite des Kunststoffteils angeordnet.

Vorzugweise sind mindestens zwei Kameras in der Stumpfschweissmaschine angeordnet, wobei die Kameras jeweils in einer der Frontebenen der Stumpfweissmaschine angeordnet sind und auf die gegenüberliegenden Stirnseiten der Kunststoffteile ausgerichtet sind.

Als vorteilhaft hat sich gezeigt, wenn die Kameras in der Frontebene unterhalb des zu verschweissenden Kunststoffteils angeordnet sind. Wodurch die Kameras mit einem schrägen Blickwinkel nach oben auf die gegenüberliegenden Stirnseiten eine Aufnahme des Schweissbereichs machen können.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:

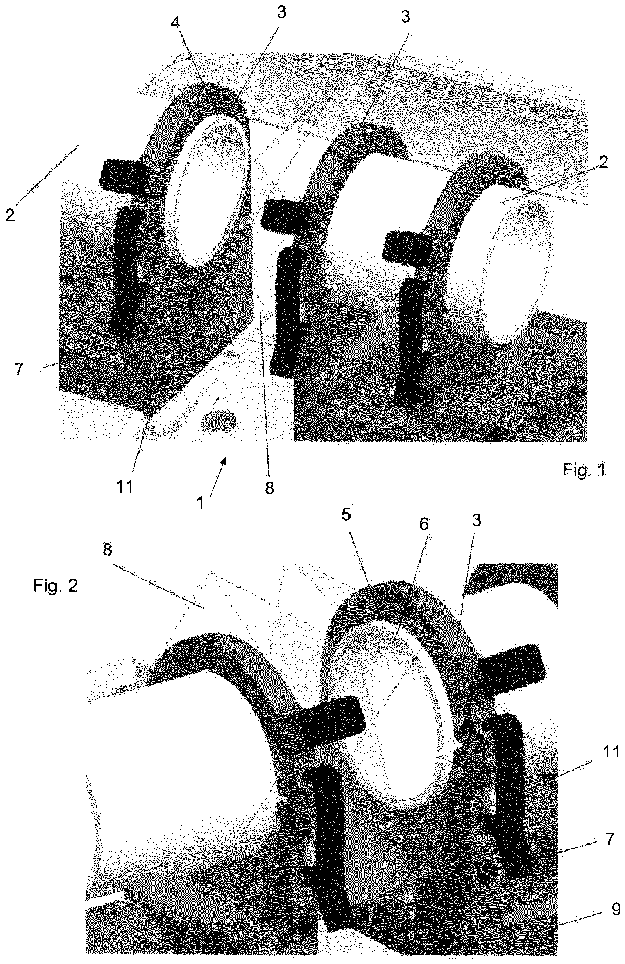

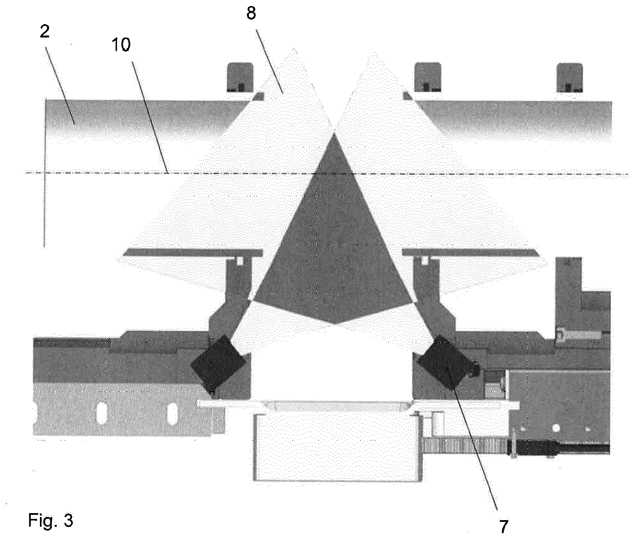

Fig. 1 eine dreidimensionale Ansicht von zwei sich gegenüberliegenden und eingespannten Kunststoffteilenden,
Fig. 1 eine dreidimensionale Ansicht von zwei sich gegenüberliegenden Kunst stoffteilenden mit erkennbarem Schmelzbereich und
Fig. 2 eine Frontansicht auf einen Teilbereich der Stumpfschweissmaschine.

Die in Fig. 1 dargestellte Zeichnung zeigt einen Teilbereich einer erfindungsgemässen Stumpfschweissmaschine 1 mit eingespannten noch zu verschweissenden Kunststoffteilen 2, vorzugsweise Rohrleitungskomponenten 2. Die Stumpfschweissmaschine 1 weist eine Basiseinheit 11, einen Hobel (nicht dargestellt) und einen Schweissspiegel (nicht dargestellt) auf. Zudem weist die erfindungsgemässe Stumpfschweissmaschine 1 Spannvorrichtungen 3 auf, die koaxial zueinander angeordnet sind und in denen die Kunststoffteile 2 fixiert werden. Die Stumpfschweissmaschine 1 beinhaltet zwei sich zugewandte Frontebenen 11 die von den Enden 6 der zu verschweissenden Kunststoffteilen 2 überragt werden. Die Frontebenen 11 werden vorzugsweise durch zueinander gewandte Stirnseiten von zwei Spannvorrichtungen 3 oder der Basiseinheit 9 gebildet. Die Frontebenen 11 bilden die vertikal verlaufenden Fronten der beiden Spannbereiche der Stumpfschweissmaschine 1, welche jeweils eines der miteinander zu verschweissenden Kunststoffteile 2 festspannt. In den Fronteben 11 ist jeweils eine Kamera 7 zur Aufnahme der Stirnseite 4 des Kunststoffteils 2 angeordnet. Gut ersichtlich in den Figuren sind die schrägen Blickwinkel 8 der Kameras 7. Die Kameras 7 sind vorzugsweise schräg zur Frontebene 11 in der Schweissmaschine 1 angeordnet. Dadurch, dass die Kameras 7 fest in den Frontebenen 11 angeordnet sind, wird sobald die Aufschmelzphase durch das Entfernen des Heizspiegels beendet ist eine Aufnahme des Schmelzbereichs 6 aus dem schrägen Blickwinkel 9 gemacht. Selbstverständlich kann auch eine Aufnahme der Stirnseiten 4 der Kunststoffteile 2 zur Überprüfung der Oberfläche direkt nach dem Hobeln oder auch vor dem Hobeln zur Material oder Teileerkennung gemacht werden. Dies ermöglicht die autonome Justierung der Stumpfschweissmaschine 1 aufgrund der zu Verschweissenden Kunststoffteile. Durch die Steuerung und die hinterlegten Daten erkennt die Maschine die zu verschweissenden Teile und nimmt alle nötigen Einstellungen automatisch vor wie auch der Schweissprozess automatisch abläuft. Zudem kann auch direkt ein Schweissprotokoll erstellt werden mit den erfassten Aufnahmen und der Beurteilung der Aufnahmen mit Hilfe des Bildauswertungssystems aufgrund dem die aufgenommenen und begradigten Aufnahmen mit vorgegeben Werten bzw. Aufnahmen verglichen und als genügend oder ungenügend eingestuft werden.

### Bezugszeichenliste

- 1: Stumpfschweissmaschine
- 2: Kunststoffteil / Rohrleitungskomponente
- 3: Spannvorrichtung
- 4: Stirnseite Kunststoffteil
- 5: Kunststoffteilende
- 6: Schmelzbereich
- 7: Kamera
- 8: Schräger Blickwinkel
- 9: Basiseinheit
- 10: Längsachse
- 11: Frontebene

## Patentansprüche

1. Verfahren zur Qualitätsbeurteilung einer Stumpfschweissung von Kunststoffteilen (2) vorzugsweise Rohrleitungskomponenten (2) mittels einer Stumpfschweissmaschine (1), wobei zwei Kunststoffteile in koaxialer Lage zueinander mittels Spannvorrichtungen (3) eingespannt und fixiert werden, wobei die sich gegenüberliegenden Stirnseiten (4) der Kunststoffteile (2) mittels eines dazwischen bringbaren Hobels plangehobelt werden und die Kunststoffteilenden (5) mittels eines dazwischen bringbaren Heizspiegels aufgeschmolzen und anschliessend an das Aufschmelzen zusammengefügt werden, **dadurch gekennzeichnet, dass** nach dem Aufschmelzen die entstandenen Schmelzbereiche (6) an den Stirnseiten (4) der Kunststoffteilenden (5) mittels mindestens eine Kamera (7) überprüft werden.

2. Verfahren nach Anspruch 1, **dadurch gekennzeichnet, dass** die Überprüfung der Schmelzbereiche (6) mittels Kamera (7) vor dem Fügen der beiden Kunststoffteilenden (5) erfolgt.

3. Verfahren nach einem der Ansprüche 1 oder 2, **dadurch gekennzeichnet, dass** die Aufnahme der Stirnseiten (4) der Kunststoffteile (5) durch die Kamera (7) in einem schrägen Blickwinkel (8) erfolgt.

4. Verfahren nach Anspruch 3 **dadurch gekennzeichnet, dass** die Aufnahme der Kamera (7) zur Auswertung begradigt wird.

5. Verfahren nach Anspruch 3 **dadurch gekennzeichnet, dass** die Aufnahme getätigt aus einem schrägen Blickwinkel (8) der Kamera (7) in eine frontale Aufnahme konvertiert wird.

6. Verfahren nach einem der vorangehenden Ansprüche, **dadurch gekennzeichnet, dass** die begradigte bzw. die in eine frontale Aufnahme konvertierte Aufnahme des Schmelzbereichs (6) an der Stirnseite (4) mittels eines Bildauswertungssystems als der Qualität genügend oder ungenügend eingestuft wird.

7. Stumpfschweissmaschine (1) zum Durchführen des Verfahrens nach einem der Ansprüche 1 bis 6, beinhaltend eine Basiseinheit (9), einen Hobel, einen Heizspiegel, eine Steuerung, mindestens zwei sich koaxial gegenüberliegende Spannvorrichtungen (3) und zwei sich zugewandte Frontebenen (11), **dadurch gekennzeichnet, dass** mindestens eine Kamera (7) zur Aufnahme der Kunststoffteilstirnseiten (4) an der Stumpfschweissmaschine (1) angeordnet ist.

8. Stumpfschweissmaschine (1) nach Anspruch 8, **dadurch gekennzeichnet, dass** die Kamera (7) fest an der Stumpfschweissmaschine (1) angeordnet ist.

9. Stumpfschweissmaschine (1) nach einem der Ansprüche 8 oder 9, **dadurch gekennzeichnet, dass** die Kamera (7) an der Frontebene (11) der Stumpfschweissmaschine (1) angeordnet ist.

10. Stumpfschweissmaschine (1) nach einem der Ansprüche 7 bis 9, **dadurch gekennzeichnet, dass** die Kamera versetzt zur Längsachse angeordnet ist und einen schrägen Blickwinkel (8) zur Aufnahme der Stirnseiten (4) der Kunststoffteilenden (5) aufweist.

11. Stumpfschweissmaschine (1) nach einem der Ansprüche 7 bis 10, **dadurch gekennzeichnet, dass** mindestens zwei Kameras (7) in der Stumpfschweissmaschine (1) angeordnet sind, wobei die Kameras (7) jeweils in einer der Frontebenen (11) der Stumpfweissmaschine (1) angeordnet sind und auf die gegenüberliegenden Stirnseiten (4) der Kunststoffteile (2) ausgerichtet sind.
